# EUROPÄISCHE PATENTSCHRIFT

(11) **EP 2 566 734 B1**
(45) Veröffentlichungstag und Bekanntmachung des Hinweises auf die Patenterteilung: **08.04.2015**
(21) Anmeldenummer: 11723289.2
(22) Anmeldetag: 02.05.2011
(51) Int. Cl.: B60T 17/08, B60T 13/74, F16D 65/14, F16D 65/28, F16D 121/02, F16D 123/00, F16D 125/40, F16D 125/50, F16D 121/26

(54) **FEDERSPEICHERBREMSZYLINDER MIT INNERHALB DER SPEICHERFEDER ANGEORDNETEM ELEKTROMOTOR**
SPRING ACCUMULATOR BRAKE CYLINDER HAVING AN ELECTRIC MOTOR DISPOSED WITHIN THE ACCUMULATOR SPRING
CYLINDRE DE FREIN À ACCUMULATEUR PRÉSENTANT UN MOTEUR ÉLECTRIQUE MONTÉ À L'INTÉRIEUR DU RESSORT ACCUMULATEUR

(30) Priorität: 05.05.2010 DE 102010019603
(43) Veröffentlichungstag der Anmeldung: 13.03.2013
(73) Patentinhaber: KNORR-BREMSE Systeme für Nutzfahrzeuge GmbH, 80809 München (DE)
(72) Erfinder: GERUM, Eduard, 83026 Rosenheim (DE); MAYR, Mathias, 82110 Germering (DE)
(74) Vertreter: Schönmann, Kurt
(86) Internationale Anmeldenummer: PCT/EP2011/056950
(87) Internationale Veröffentlichungsnummer: WO 2011/138273

(56) Entgegenhaltungen:
- EP-A1- 2 165 899
- EP-A1- 2 165 900

## Beschreibung

Die Erfindung geht aus von einer elektromechanischen Zuspannvorrichtung für Fahrzeugbremsen gemäß dem Oberbegriff von Anspruch 1.

Eine elektromechanische Zuspannvorrichtung ist beispielsweise aus der DE 198 33 304 A1 bekannt. Bei der bekannten Zuspannvorrichtung nimmt die Speicherfeder des Federspeicherbremszylinders in der Lösestellung eine Federenergie speichernde Lage ein. Zum Zuspannen der Bremse wird die durch eine Sperreinrichtung gesicherte Lage des Federspeicherbremskolbens gelöst, wobei die Speicherfeder entspannt und der Federspeicherbremskolben die zugespannte (bremskrafterzeugende) Lage einnimmt. Durch Bestromen des Elektromotors wird der Federspeicherbremskolben aus der zugespannten Lage in seine gelöste Lage überführt, wobei dem Federspeicherbremskolben und dem Elektromotor Kraftübertragungsmittel in Form eines Zahnrad-Untersetzungsgetriebes sowie eines Mutter-Spindeltriebs zwischengeordnet sind. Der Elektromotor ist dabei axial versetzt in Bezug zur Federspeicherbremskolbenstange angeordnet.

Gemäß Fig.17 der EP 2 165 900 A1 wird eine gattungsgemäße Zuspannvorrichtung vorgeschlagen. Der Mutter-Spindel-Trieb beinhaltet eine vom Elektromotor angetriebene axialfeste Mutter, welche mit einer inneren Bajonetthülse über eine Keilwellenverbindung verbunden ist, die über ein Gewinde mit der mit dem Federspeicherbremskolben verbundenen Federspeicherbremskolbenstange als drehende Spindel verbunden ist. Weiterhin ist eine äußere Bajonetthülse vorgesehen, welche am Federspeicherbremskolben frei drehbar gelagert und durch Drehung der inneren Bajonetthülse mit dieser im Rahmen einer Bajonettverbindung gekoppelt werden kann. Die Federspeicherbremskolbenstange ist über einen Teller mit einem weiteren Teller der Betriebsbremskolbenstange magnetisch verbunden, so dass bei einem Zuspannen des Betriebsbremszylinders die Federspeicherbremskolbenstange in Zuspannrichtung mitgenommen wird. Hierzu muss jedoch die Bajonettverbindung geöffnet sein, damit sich die Federspeicherbremskolbenstange zusammen mit der inneren Bajonetthülse relativ zur axialfesten äußeren Bajonetthülse axial in Zuspannrichtung bewegen kann.

Die zugespannte Betriebsbremsstellung des Betriebsbremskolbens wird beim Feststellbremsen dann dadurch gesichert, dass durch elektromotorischen Antrieb der Mutter und damit der inneren Bajonetthülse die Bajonettverbindung mit der äußeren Bajonetthülse gekoppelt und dann die Federspeicherbremskolbenstange durch weitere Rotation der inneren Bajonetthülse in dieser axial verschraubt wird, so dass dadurch der Teller der Federspeicherbremskolbenstange gegen den Teller der sich in Zuspannstellung befindlichen Betriebsbremskolbenstange gedrängt wird. Bedingt durch den komplexen Aufbau der Zuspannvorrichtung fällt diese in axialer Richtung jedoch relativ lang aus, wie insbesondere die Fig. 17 dieser Schrift zeigt.

Derartige elektromechanische Zuspannvorrichtungen werden bei Nutzfahrzeugen radnah und damit im Radhaus angeordnet, weshalb ihr Platzbedarf möglichst gering sein sollte.

Der vorliegenden Erfindung liegt demgegenüber die Aufgabe zugrunde, eine elektromechanische Zuspannvorrichtung der eingangs erwähnten Art derart weiter zu entwickeln, dass sie kompakter baut.

Diese Aufgabe wird erfindungsgemäß durch die Merkmale von Anspruch 1 gelöst.

### Offenbarung der Erfindung

Die Erfindung basiert darauf, dass der Elektromotor von der als Schraubenfeder ausgeführten Speicherfeder radial umschlossen ist und dass sich die radiale Umschließung des Elektromotors in axialer Richtung gesehen wenigstens über einen axialen Abschnitt des Elektromotors erstreckt. Dadurch wird der meist ungenutzte Raum innerhalb des gedachten Hüllkörpers, den die Schraubenfeder mit ihren Windungen beschreibt, dadurch genutzt, dass dort der Elektromotor untergebracht wird. Dies führt zu einer erheblichen Raumersparnis gegenüber dem eingangs erwähnten Stand der Technik.

Durch den Elektromotor ist die erfindungsgemäße elektromechanische Zuspannvorrichtung insbesondere zum Feststellbremsen oder zum Hilfsbremsen geeignet, wobei es beim Hilfsbremsen nach einem Ausfall der Betriebsbremse vor allem auf ein dosiertes Zuspannen ankommt, was durch den Elektromotor bzw. durch eine entsprechende elektronische Ansteuerung des Elektromotors realisierbar ist. Insbesondere erstreckt sich die radiale Umschließung des Elektromotors durch die Speicherfeder in axialer Richtung gesehen wenigstens über die gesamte Länge des Elektromotors, wobei die radiale und axial vollständige Umschließung des Elektromotors durch die Speicherfeder sowohl im gelösten als auch im zugespannten Zustand gegeben ist. Weiterhin ist der der Elektromotor bevorzugt koaxial zur Speicherfeder angeordnet. Dadurch wird der von der Speicherfeder umschlossene Raum am besten genutzt.

Der Elektromotor ist in einer die Speicherfeder beinhaltenden Federkammer angeordnet, welche von einer Federspeicherbremskammer des Federspeicherbremszylinders durch den Federspeicherbremskolben getrennt ist.

Weiterhin sind Kraftübertragungsmittel in Form eines Mutter-Spindeltriebs zur Übertragung der Rotationsbewegung des Elektromotors in eine Linearbewegung des Federspeicherbremskolbens vorgesehen. Dabei kann nicht nur der Mutter-Spindeltrieb zwischen dem Elektromotor und dem Federspeicherbremskolben bzw. der Federspeicherbremskolbenstange vorgesehen sein, sondern auch beispielsweise ein bevorzugt in das Gehäuse des Elektromotors integriertes Planetengetriebe, welches die Drehbewegung eines Rotors des Elektromotors auf eine hierzu bevorzugt koaxiale Ausgangswelle des Planetengetriebes beispielsweise untersetzend überträgt.

Zu einer besonders Bauraum sparenden Anordnung trägt dann bei, wenn die Federspeicherbremskolbenstange hohlzylindrisch ausgeführt ist, wobei der Mutter-Spindeltrieb im Inneren der hohlzylindrischen Federspeicherbremskolbenstange angeordnet ist. Dann wird auch der hohlzylindrische Innenraum der Federspeicherbremskolbenstange zur Unterbringung von Teilen des Antriebsstrangs des Elektromotors genutzt.

Durch die in den Unteransprüchen aufgeführten Maßnahmen sind vorteilhafte Weiterbildungen und Verbesserungen der in den unabhängigen Ansprüchen angegebenen Erfindung möglich.

Bevorzugt ist die Mutter des Mutter-Spindeltriebs im Inneren der hohlzylindrischen Federspeicherbremskolbenstange drehfest aber axial beweglich gehalten und die Spindel durch den Rotor des Elektromotors koaxial angetrieben. Die Drehmomentabstützung erfolgt dann über die Mutter des Mutter-Spindeltriebs und den Elektromotor am Federspeicherbremszylinder.

Weiterhin ragt dann die Spindel des Mutter-Spindeltriebs bevorzugt von der Federkammer her in das Innere der hohlzylindrischen Federspeicherbremskolbenstange hinein. Abhängig von der Drehstellung des Elektromotors und damit der Spindel relativ zur drehfesten Mutter des Mutter-Spindeltriebs nimmt folglich die Federspeicherbremskolbenstange eine bestimmte axiale Lage ein zwischen zwei Endstellungen ein, der Zuspannstellung und der Lösestellung.

Besonders bevorzugt ist der Mutter-Spindeltrieb selbsthemmend ausgeführt. Dann muss keine Sperreinrichtung zur Sicherung der Lage des Federspeicherbremskolbens vorgesehen werden, weil die jeweils eingenommene Lage des Federspeicherbremskolbens durch den selbsthemmenden Mutter-Spindeltrieb gesichert wird. Es ist aber auch eine Ausführungsform möglich, bei welcher eine Arretierung des Federspeicherbremskolbens in der Lösestellung vorgesehen ist.

Der Elektromotor dient bevorzugt sowohl zum Spannen als auch zum Entspannen der Speicherfeder, d.h. dass der Elektromotor gegen die Wirkung der Speicherfeder arbeitet, um die Federspeicherbremse zu lösen und andererseits die Zuspannbewegung der Speicherfeder unterstützend zulässt, damit diese die Zuspannkraft aufbringen kann. Weil die Bremskraft dann alleine durch die Speicherfeder aufgebracht wird, ist auch dann noch genügend Bremswirkung vorhanden, wenn sich aufgrund thermischer Einflüsse die geometrischen Verhältnisse der Bremse ändern.

Nicht zuletzt bleibt dann im Fehlerfall, beispielsweise nach einem Kabelbruch in einem Kabel zur Ansteuerung des Elektromotors der Status vor dem Fehler erhalten, so dass es insbesondere nicht zu einem unerwünschten Zuspannen der Federspeicherbremse kommen kann, was speziell während der Fahrt eine Unfallgefährdung darstellt.

Gemäß einer Weiterbildung bildet der Federspeicherbremszylinder zusammen mit einem Betriebsbremszylinder einen kombinierten Betriebsbrems- und Federspeicherbremszylinder, mit einem im Gehäuse des Betriebsbremszylinders angeordneten Betriebsbremskolben, wobei die Federspeicherbremskolbenstange durch eine zentrale Bohrung einer Zwischenwand zwischen dem Betriebsbremszylinder und dem Federspeicherbremszylinder derart ragt, dass sie auf den Betriebsbremskolben wirkt. In der zentralen Bohrung der Zwischenwand ist dann eine Dichtungsanordnung aufgenommen ist, welche das Innere des Betriebsbremszylinders gegenüber dem Inneren des Federspeicherbremszylinders abdichtet.

Ein solcher kombinierter Betriebsbrems- und Federspeicherbremszylinder ist beispielsweise aus der DE 40 11 739 A1 bekannt. Bei solchen kombinierten Betriebsbrems- und Federspeicherbremszylindern betätigt der Federspeicherbremskolben im Feststell- oder Hilfsbremsfall mit seiner Federspeicherbremskolbenstange den Betriebsbremskolben, welcher wiederum eine Betriebsbremskolbenstange aufweist, die mit einem Bremsmechanismus der Fahrzeugbremse, insbesondere einer Scheibenbremse zusammen wirkt.

Ein Bremsmechanismus einer Zuspannvorrichtung ist beispielsweise in der EP 0 740 085 B1 beschrieben und weist einen mit der Betriebsbremskolbenstange gelenkig verbundenen Schwenkhebel auf, welcher mit einer Zuspannwelle drehfest verbunden ist, die mit einer Nockenkontur versehen ist, die bei einem Verdrehen der Zuspannwelle um ihre Längsachse zu einer axialen Relativbewegung eines Bremssattels und einer Bremsbacke einer Scheibenbremse führt.

Besonders bevorzugt ist der Bremsmechanismus selbstverstärkend ausgeführt, d.h. dass die Bremskraft z.B. mit Hilfe von Keil- oder Rampenflächen und Wälzkörpern verstärkt wird, wenn sich ein durch die Bremse gebremstes Rad mit einer kleinen Drehbewegung dreht. Damit ist die Zuspanneinrichtung vor allem als Feststellbremse geeignet und kann wegen der Selbstverstärkung noch kompakter bauen, da dann weniger Federkraft und damit eine kleinere Speicherfeder ausreichend ist, um eine beispielsweise vom Gesetzgeber geforderte Mindestfeststellbremskraft zu erzeugen.

Genaueres geht aus der folgenden Beschreibung eines Ausführungsbeispiels hervor.

### Zeichnung

Nachstehend ist ein Ausführungsbeispiel der Erfindung in der Zeichnung dargestellt und in der nachfolgenden Beschreibung näher erläutert. In der Zeichnung zeigt die einzige Figur eine Querschnittsdarstellung eines kombinierten Betriebsbrems- und Federspeicherbremszylinders gemäß einer bevorzugten Ausführungsform der Erfindung.

### Beschreibung des Ausführungsbeispiels

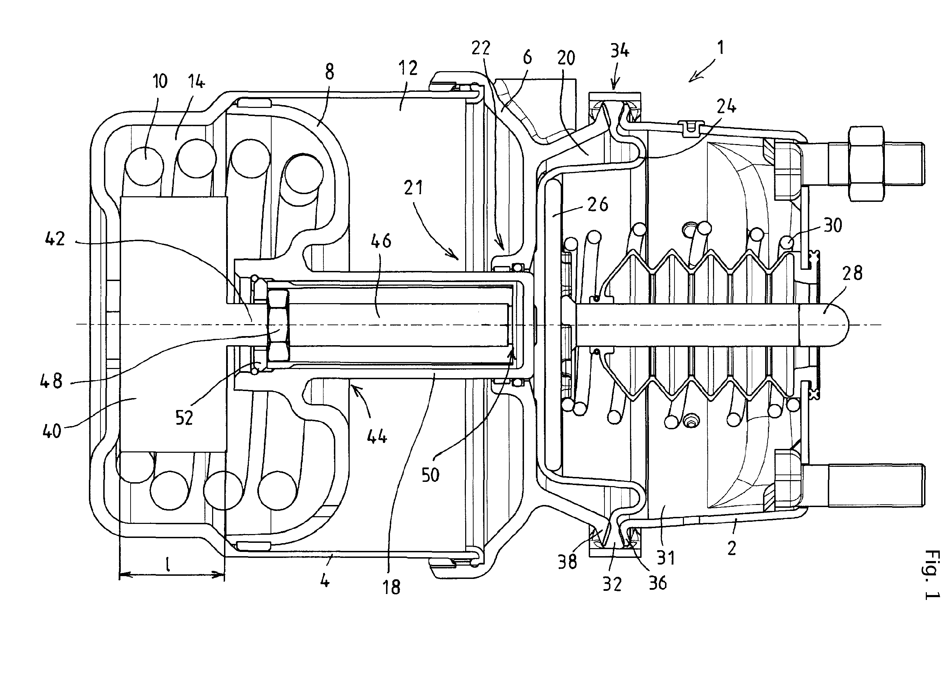

In Fig.1 ist ein kombinierter Betriebsbrems- und Federspeicherbremszylinder 1, nachfolgend Kombizylinder genannt, dargestellt. Der Kombizylinder 1 betätigt einen hier nicht gezeigten Bremsmechanismus einer Fahrzeugbremse und besteht aus einem Betriebsbremszylinder 2 und aus einem mit diesem baulich und funktionell verbundenen Federspeicherbremszylinder 4. Der Betriebsbremszylinder 2 und der Federspeicherbremszylinder 4 sind durch eine Zwischenwand 6 voneinander getrennt. Innerhalb des Federspeicherbremszylinders 4 ist ein Federspeicherbremskolben 8 verschiebbar angeordnet, wobei an einer Seite des Federspeicherbremskolbens 8 eine Speicherfeder 10 anliegt. Die Speicherfeder 10 stützt sich an ihrer entgegen gesetzten Seite am Boden des Federspeicherbremszylinders 4 ab. Zwischen dem Federspeicherbremskolben 8 und der Zwischenwand 6 ist eine Federspeicherbremskammer 12 ausgebildet.

Bei linearer Verschiebung des Federspeicherbremskolbens 8 innerhalb des Federspeicherbremszylinders 4 zum Zwecke des Bremsenlösens, d.h. in der Figur nach links, wird die Luft, welche innerhalb der die Speicherfeder 10 aufnehmenden Federkammer 14 ansteht, über ein hier nicht gezeigtes Entlüftungsventil herausgedrückt. Zum Zwecke der Abbremsung vermag die Speicherfeder 10 den Federspeicherbremskolben 8 in Zuspannstellung zu verschieben, d.h. in der Figur nach rechts. Dabei wird die von dem Federspeicherbremszylinder 4 aufgebrachte Bremskraft, welche beispielsweise zum Feststellbremsen eines bereits durch die Betriebsbremse eingebremsten Fahrzeugs oder als Hilfsbremskraft bei Ausfall der Betriebsbremse dient, bevorzugt ausschließlich von der Speicherfeder 10 aufgebracht.

Der Federspeicherbremskolben 8 ist mit einer hohlen Federspeicherbremskolbenstange 18 verbunden, welche sich durch die Zwischenwand 6 in eine Betriebsbremskammer 20 des Betriebsbremszylinders 2 erstreckt. Eine in eine zentrale Bohrung 21 der Zwischenwand 6 eingesetzte Dichtungsanordnung 22 dichtet gegenüber der Außenwand der Federspeicherbremskolbenstange 18 während deren Längsbewegung ab. In die Betriebsbremskammer 20 mündet ein nicht gezeigter Einlass, über welchen zum Betätigen des Betriebsbremszylinders 2 Druckluft eingelassen und abgelassen wird. Die Druckluft wirkt auf eine innerhalb des Betriebsbremszylinders 2 eingesetzte Membrane 24 ein, an deren entgegen gesetzter Seite ein Druckstück in Form eines steifen Membrantellers 26 vorgesehen ist. Genauer trennt die Membrane 24 die mit Druckmittel be- und entlastbare Betriebsbremskammer 20 des Betriebsbremszylinders 2 von einer eine am Membranteller 26 abgestützte Rückholfeder 30 aufnehmende Federkammer 31.

Der Membranteller 26 ist mit einer Druckstange 28 verbunden, die mit einem Bremsbetätigungsmechanismus außerhalb des Kombizylinders 1 zusammenwirkt. Hierbei kann es sich beispielsweise um Betätigungselemente einer Scheibenbremse eines Kraftfahrzeugs handeln. Der Betriebsbremszylinder 2 ist ein aktiver Bremszylinder, d.h. dass die Betriebsbremse durch Belüften der Betriebsbremskammer 20 zugespannt und durch Entlüften gelöst wird. Die sich einerseits am Membranteller 26 und andererseits am Boden des Betriebsbremszylinders 2 abstützende Rückholfeder 30 sorgt dafür, dass die Druckstange 28 bei entlüfteter Betriebsbremskammer 20 in die Lösestellung zurückgeholt wird.

Ein radial äußerer Befestigungsrand 32 der Membrane 24 weist einen keilförmigen, sich nach radial innen hin verjüngenden Querschnitt auf. Dieser radial äußere Befestigungsrand 32 der Membrane 24 mit dem keilförmigen, sich nach radial innen verjüngenden Querschnitt ist in eine komplementär geformte Aufnahme 34 mit keilförmigem, sich nach radial außen erweiternden Querschnitt zwischen der Zwischenwand 6 und dem Betriebsbremszylinder 2 geklemmt. Die Zwischenwand 6 und der Betriebsbremszylinder 2 bilden ihre äußeren Ränder als nach radial außen abgebogene Flansche 36, 38 aus, deren gegeneinander weisende Innenflächen die Aufnahme 34 mit keilförmigem Querschnitt zwischen sich ausbilden.

Ein Elektromotor 40 dient hier zum Spannen und Entspannen der Speicherfeder 10, um den Federspeicherbremskolben 8 und damit die Federspeicherbremse in Lösestellung bzw. in Zuspannstellung im Rahmen einer Feststellbremsfunktion oder Hilfsbremsfunktion zu bringen.

Der Elektromotor 40 ist vorzugsweise ein Hohlwellenmotor mit integriertem und hier nicht explizit gezeigtem Planetengetriebe. Der Elektromotor 40 ist dabei von der als Schraubenfeder ausgeführten Speicherfeder 10 radial umschlossen, wobei sich die radiale Umschließung des Elektromotors 40 in axialer Richtung gesehen bevorzugt über die gesamte Länge I des Elektromotors 40 in Axialrichtung erstreckt, wobei die radiale und axial vollständige Umschließung des Elektromotors durch die Speicherfeder 10 sowohl in dem in der Figur gezeigten gelösten Zustand (Speicherfeder gespannt) wie auch im zugespannten Zustand (Speicherfeder entspannt) der Federspeicherbremse gegeben ist, wie anhand der Figur leicht vorstellbar ist. Weiterhin ist der der Elektromotor 40 bzw. dessen Hohlwelle bevorzugt koaxial zur Speicherfeder 10 bzw. zum Federspeicherbremskolben 8 bzw. zur Federspeicherbremskolbenstange 18 angeordnet. Alternativ könnte der Elektromotor 40 auch nicht koaxial zu einer Mittelachse des Federspeicherbremszylinders 4 angeordnet sein, sondern beispielsweise axial versetzt hierzu.

Der Elektromotor 40 ist dabei in der die Speicherfeder 10 beinhaltenden Federkammer 31 angeordnet, welche von der Federspeicherbremskammer 12 des Federspeicherbremszylinders 4 durch den Federspeicherbremskolben 8 getrennt ist.

Das hier nicht separat gezeigte Planetengetriebe ist in das Gehäuse des Elektromotors 40 als Kraftübertragungsmittel integriert, welches die Drehbewegung der Hohlwelle des Elektromotors 40 beispielsweise untersetzt. Das Planetengetriebe überträgt daher die Drehbewegung der Hohlwelle des Elektromotors 40 auf eine hierzu bevorzugt koaxiale Ausgangswelle 42 des Planetengetriebes. Weiterhin sind Kraftübertragungsmittel in Form eines Mutter-Spindeltriebs 44 zur Wandelung der Rotationsbewegung der Ausgangswelle 42 des Planetengetriebes in eine Linearbewegung des Federspeicherbremskolbens 8 vorgesehen. Bevorzugt ist der Mutter-Spindeltrieb 44 selbsthemmend ausgeführt, so dass die einmal eingenommene Drehlage der Spindel 46 gesichert beibehalten wird wenn der Elektromotor 40 nicht bestromt wird oder ist.

Die Federspeicherbremskolbenstange 18 ist beispielsweise hohlzylindrisch ausgeführt, wobei der Mutter-Spindeltrieb 44 im Inneren der hohlzylindrischen Federspeicherbremskolbenstange 18 angeordnet ist. Dabei ist bevorzugt die Mutter 48 des Mutter-Spindeltriebs 44 im Inneren der hohlzylindrischen Federspeicherbremskolbenstange 18 drehfest aber linear beweglich gehalten und die Hohlwelle des Elektromotors bzw. die Ausgangswelle 42 des Planetengetriebes koaxial zu Mutter 48 und Spindel 46. Die Drehmomentabstützung erfolgt dann über das Gehäuse des Elektromotors 40, welches am Federspeicherbremszylinder 4 festgelegt ist. Die Spindel 46 des Mutter-Spindeltriebs 44 ist weiterhin in einem Drehlager 50 am freien Ende der Federspeicherbremskolbenstange 18 drehgelagert.

Weiterhin ragt die Spindel 46 des Mutter-Spindeltriebs 44 von der Federkammer 14 her in das Innere der hohlzylindrischen Federspeicherbremskolbenstange 18 hinein. Abhängig von der Drehstellung des Rotors des Elektromotors 40 bzw. der Ausgangswelle 42 und damit der Spindel 46 in Bezug zur drehfesten Mutter 48 des Mutter-Spindeltriebs 44 nimmt folglich die Federspeicherbremskolbenstange 18 eine bestimmte axiale Lage zwischen zwei Endstellungen ein, nämlich die Zuspannstellung und die in der Figur gezeigte Lösestellung.

Bei dem kombinierten Betriebsbrems- und Federspeicherbremszylinder 1 betätigt der Federspeicherbremskolben 8 im Feststell- oder Hilfsbremsfall mit seiner Federspeicherbremskolbenstange 18 den Betriebsbremskolben 24, 26 mit zugeordneter Druckstange 28, die mit einem hier nicht gezeigten Bremsmechanismus der Fahrzeugbremse, insbesondere mit einer Scheibenbremse zusammen wirkt.

Besonders bevorzugt ist dieser Bremsmechanismus selbstverstärkend ausgeführt, d.h. dass die von der Druckstange 28 ausgeübte Bremskraft z.B. mit Hilfe von Keil- oder Rampenflächen und Wälzkörpern verstärkt wird, wenn sich ein durch die Bremse gebremstes Rad mit einer kleinen Drehbewegung dreht. Somit führt eine der Bremsung entgegen wirkende Drehbewegung zu einer Verstärkung der Feststellbremskraft.

Die Funktionsweise des Kombizylinders 1 in Bezug auf die Feststellbrems- oder Hilfsbremsfunktion ist dann wie folgt:
Ausgehend von der in der Figur gezeigten Lösestellung, in welcher eine im Inneren der Federspeicherbremskolbenstange 18 motorendseitig gehaltene Anschlagscheibe 52 aufgrund der von der Speicherfeder 10 auf den Federspeicherbremskolben 8 wirkenden Druckkräfte gegen die Mutter 48 gedrängt ist, wird die Spindel 46 durch Bestromen des Elektromotors 40 in der Mutter 48 in einer Drehrichtung verschraubt, in welcher die Mutter 48 auf der Spindel 46 in der Figur gesehen nach rechts wandert und sich dadurch auch die Federspeicherbremskolbenstange 18 nach rechts bewegt. Dadurch übt die Federspeicherbremskolbenstange 18 über den Membranteller 26 Druck auf die Druckstange 28 aus, welche wiederum den Bremsmechanismus betätigt. Diese Zuspannbewegung kann im Rahmen einer Feststellbremsfunktion oder einer Hilfsbremsfunktion bei Ausfall der Betriebsbremsfunktion durch den Betriebsbremszylinder 2 erfolgen, wenn eine dosierte Bremskraft gefordert ist, was durch eine entsprechende Steuerung des Elektromotors 40 realisiert wird. Die Bremskraft wird dabei alleine von der Speicherfeder 10 aufgebracht.

Zum Lösen der Federspeicherbremse wird die Spindel 46 durch den Elektromotor 40 in der Gegenrichtung angetrieben, so dass die innerhalb der Federspeicherbremskolbenstange 18 drehfest gehaltene, aber axial bewegliche Mutter 48 weiterhin an der Anschlagscheibe52 anliegt, aber auf der Spindel 46 in Bezug zur Figur nach links wandert, wodurch die Federspeicherbremskolbenstange 18 ebenfalls nach links bewegt wird.

### Bezugszeichenliste

- 1: Kombinierter Betriebsbrems- und Federspeicherzylinder
- 2: Betriebsbremszylinder
- 4: Federspeicherbremszylinder
- 6: Zwischenwand
- 8: Federspeicherbremskolben
- 10: Speicherfeder
- 12: Federspeicherbremskammer
- 14: Federkammer
- 18: Federspeicherbremskolbenstange
- 20: Betriebsbremskammer
- 21: Bohrung
- 22: Dichtungsanordnung
- 24: Membrane
- 26: Membranteller
- 28: Druckstange
- 30: Rückholfeder
- 31: Federkammer
- 32: Befestigungsrand
- 34: Aufnahme
- 36: Flansch
- 38: Flansch
- 40: Elektromotor
- 42: Ausgangswelle
- 44: Mutter-Spindeltrieb
- 46: Spindel
- 48: Mutter
- 50: Drehlage
- 52: Anschlagscheibe

## Patentansprüche

1. Elektromechanische Zuspannvorrichtung für Fahrzeugbremsen, mit einem in einem Federspeicherbremszylinder (4) einer Federspeicherbremse angeordneten, durch wenigstens eine als Schraubenfeder ausgeführte Speicherfeder (10) betätigbaren Federspeicherbremskolben (8) mit einer mit diesem verbundenen Federspeicherbremskolbenstange (18) zum Zuspannen und Lösen der Federspeicherbremse sowie mit einem Elektromotor (40) zum Spannen und/oder zum Entspannen der Speicherfeder (10), wobei der Elektromotor (40) von der als Schraubenfeder ausgeführten Speicherfeder (10) radial umschlossen ist und sich die radiale Umschließung des Elektromotors (40) in axialer Richtung gesehen wenigstens über einen axialen Abschnitt des Elektromotors (40) erstreckt und wobei der Elektromotor (40) am Federspeicherbremszylinder (4) festgelegt und in einer die Speicherfeder (10) beinhaltenden Federkammer (14) angeordnet ist, welche von einer Federspeicherbremskammer (12) des Federspeicherbremszylinders (4) durch den Federspeicherbremskolben (8) getrennt ist und wobei Kraftübertragungsmittel in Form eines Mutter-Spindeltriebs (44) zur Übertragung und Wandelung der Rotationsbewegung des Elektromotors (40) in eine Linearbewegung des Federspeicherbremskolbens (8) vorgesehen sind und wobei eine Spindel (46) des Mutter-Spindeltriebs (44) koaxial zum Elektromotor (40) und zur Speicherfeder (10) angeordnet ist, **dadurch gekennzeichnet, dass** die Federspeicherbremskolbenstange (18) hohlzylindrisch ausgeführt ist, wobei der Mutter-Spindeltrieb (44) im Inneren der hohlzylindrischen Federspeicherbremskolbenstange (18) angeordnet ist.

2. Zuspannvorrichtung nach Anspruch 1, **dadurch gekennzeichnet, dass** sich die radiale Umschließung des Elektromotors (40) durch die Speicherfeder (10) in axialer Richtung gesehen wenigstens über die gesamte Länge (I) des Elektromotors (40) erstreckt.

3. Zuspannvorrichtung nach Anspruch 2, **dadurch gekennzeichnet, dass** die radiale und axial vollständige Umschließung des Elektromotors (40) durch die Speicherfeder (10) sowohl im gelösten als auch im zugespannten Zustand der Fahrzeugbremse gegeben ist.

4. Zuspannvorrichtung nach einem der vorhergehenden Ansprüche, **dadurch gekennzeichnet, dass** der Elektromotor (40) koaxial zur Speicherfeder (10) angeordnet ist.

5. Zuspannvorrichtung nach einem der vorhergehenden Ansprüche, **dadurch gekennzeichnet, dass** eine Mutter (48) des Mutter-Spindeltriebs (44) im Inneren der hohlzylindrischen Federspeicherbremskolbenstange (18) drehfest aber linear beweglich gehalten und die Spindel (46) durch den Elektromotor (40) koaxial angetrieben ist.

6. Zuspannvorrichtung nach Anspruch 5, **dadurch gekennzeichnet, dass** die Spindel (46) des Mutter-Spindeltriebs (44) von der Federkammer (14) her in das Innere der hohlzylindrischen Federspeicherbremskolbenstange (18) hinein ragt.

7. Zuspannvorrichtung nach einem der vorhergehenden Ansprüche, **dadurch gekennzeichnet, dass** der Mutter-Spindeltrieb (44) selbsthemmend ausgeführt ist.

8. Zuspannvorrichtung nach einem der vorhergehenden Ansprüche, **dadurch gekennzeichnet, dass** der Elektromotor (40) zum Spannen und zum Entspannen der Speicherfeder (10) vorgesehen ist, wobei der Elektromotor (40) gegen die Wirkung der Speicherfeder (10) arbeitet, um die Federspeicherbremse zu lösen und andererseits die Zuspannbewegung der Speicherfeder (10) unterstützend zulässt, damit diese die Zuspannkraft aufbringen kann.

9. Zuspannvorrichtung nach einem der vorhergehenden Ansprüche, **dadurch gekennzeichnet, dass** der Federspeicherbremszylinder (4) zusammen mit einem Betriebsbremszylinder (2) einen kombinierten Betriebsbrems- und Federspeicherbremszylinder (1) bildet, mit einem im Gehäuse des Betriebsbremszylinders (2) angeordneten Betriebsbremskolben (26), wobei die Federspeicherbremskolbenstange (18) durch eine zentrale Bohrung (21) einer Zwischenwand (6) zwischen dem Betriebsbremszylinder (2) und dem Federspeicherbremszylinder (4) derart ragt, dass sie auf den Betriebsbremskolben (26) wirkt.

10. Bremseinrichtung eines Fahrzeugs beinhaltend wenigstens eine Zuspannvorrichtung nach einem der vorhergehenden Ansprüche.

## Claims

1. Electromechanical brake application module for vehicle brakes, comprising a spring-loaded brake actuator piston (8) disposed in a spring-loaded brake actuator cylinder (4) of a spring-loaded brake, which is operable by at least one accumulator spring (10) designed as helical spring and includes a spring-loaded brake piston rod (18) connected to said brake piston (8) for application and release of the spring-loaded brake, as well as an electric motor (40) for tensioning and/or releasing said accumulator spring (10), wherein said electric motor (40) is radially enclosed by said accumulator spring (10) designed as helical spring and, seen along the axial direction, the radial enclosure of said electric motor (40) extends at least over an axial portion of said electric motor (40), and wherein said electric motor (40) is immobilized on said spring-loaded brake actuator cylinder (4) and disposed in a spring chamber (14) containing said accumulator spring (10), which is separate from a spring-loaded brake chamber (12) of said spring-loaded brake actuator cylinder (4) by said spring-loaded brake piston (8), and wherein power transmission means in the form of a nut-spindle drive unit (44) are provided for transmission and conversion of the rotary movement of said electric motor (40) into a linear movement of said spring-loaded brake actuator piston (8), and wherein a spindle (46) of said nut-spindle drive unit (44) is coaxially disposed, relative to said electric motor (40) and said accumulator spring (10), **characterized in that** said spring-loaded brake piston rod (18) is configured as a hollow cylinder, with said nut-spindle drive unit (44) being disposed inside said hollow cylindrical spring-loaded brake piston rod (18).

2. Brake application module according to Claim 1, **characterized in that**, seen along the axial direction, said radial enclosure of said electric motor (40) extends at least over the entire length (I) of said electric motor (40).

3. Brake application module according to Claim 2, **characterized in that** said radial and axial complete enclosure of said electric motor (40) by said accumulator spring (10) is present both with the vehicle brake released and with the vehicle brake applied.

4. Brake application module according to any of the preceding Claims, **characterized in that** said electric motor (40) is coaxially disposed relative to said accumulator spring (10).

5. Brake application module according to any of the preceding Claims, **characterized in that** a nut (48) of said nut-spindle drive unit (44) is retained inside said hollow cylindrical spring-loaded brake piston rod (18) in a way preventing rotation but permitting linear movement, and that said spindle (46) is coaxially driven by said electric motor.

6. Brake application module according to Claim 5, **characterized in that** said spindle (46) of said nut-spindle drive unit (44) protrudes from said spring chamber (14) into the interior of said hollow cylindrical spring-loaded brake piston rod (18).

7. Brake application module according to any of the preceding Claims, **characterized in that** said nut-spindle drive unit (44) is of a self-locking design.

8. Brake application module according to any of the preceding Claims, **characterized in that** said electric motor (40) is provided for tensioning and releasing said accumulator spring (10), with said electric motor (40) operating in opposition to the action of said accumulator spring (10) for releasing said spring-loaded brake and allows, on the other hand, the brake application movement of said accumulator spring (10) so that this spring can apply the application force.

9. Brake application module according to any of the preceding Claims, **characterized in that** said spring-loaded brake actuator cylinder (4) is combined with a service brake cylinder (2) to form a combined service brake and spring-loaded brake cylinder (1), including a service brake piston (26) disposed in the housing of said service brake cylinder (2), wherein said spring-loaded brake piston rod (18) projects through a central bore (21) of a partition wall (6) between said service brake cylinder (2) and said spring-loaded brake actuator cylinder (4) in such a way that it acts upon said service brake piston (26).

10. Braking system of a vehicle, including at least one brake application module according to any of the preceding Claims.

## Revendications

1. Module de serrage de frein électromécanique pour freins de véhicules, comprenant un vérin de commande de frein à accumulateur (8) disposé dans un cylindre de commande de frein à accumulateur (4) d'un frein à accumulateur, qui est commandable par au moins un ressort accumulateur (10) conçu sous forme d'un ressort hélicoïdal et qui comprend une tige de piston de frein à accumulateur (18) relié audit vérin de frein (8) pour le serrage et desserrage du frein à accumulateur, ainsi qu'un moteur électrique (40) afin de tendre ou détendre ledit ressort accumulateur (10), dans lequel ledit moteur électrique (40) est radialement renfermé par ledit ressort accumulateur (10) conçu sous forme d'un ressort hélicoïdal, et, vue le long de la direction axiale, l'enveloppe dudit moteur électrique (40) s'étend au moins sur une partie axiale dudit moteur électrique (40), et dans lequel ledit moteur électrique (40) est immobilisé audit vérin de commande de frein à accumulateur audit vérin de commande de frein à accumulateur (4) et disposé dans une chambre de ressort (14) renfermant ledit ressort accumulateur (10), qui est séparé d'une chambre de freinage (12) à accumulateur dudit vérin de commande de frein à accumulateur (4) par ledit vérin de commande de frein à accumulateur (8), et dans lequel des moyens de transmission sous forme d'une unité d'entraînement à écrou et broche (44) sont disposés pour la transmission et conversion du mouvement rotatif dudit moteur électrique (40) en un mouvement linéaire dudit vérin de commande de frein à accumulateur (8), et dans lequel une broche (46) de ladite unité d'entraînement à écrou et broche (44) est coaxialement disposée, par rapport audit moteur électrique (40) et ledit ressort accumulateur (10), **caractérisé en ce que** ladite tige de piston de commande de frein à accumulateur (18) est configuré sous forme d'un cylindre creux, à ladite unité d'entraînement à écrou et broche (44) étant disposée à l'intérieur de ladite tige de piston du frein creux et cylindrique, qui est sollicitée par ressort. (18).

2. Module de serrage de frein selon la revendication 1, **caractérisé en ce que**, vue le long de la direction axiale, ladite enveloppe radiale dudit moteur électrique (40) s'étend au moins sur la longueur totale (I) dudit moteur électrique (40).

3. Module de serrage de frein selon la revendication 2, **caractérisé en ce que** ladite enveloppe complète radiale et axiale dudit moteur électrique (40) par ledit ressort accumulateur (10) est présent non seulement au frein desserré mais aussi au frein de véhicule serré.

4. Module de serrage de frein selon une quelconque des revendications précédentes, **caractérisé en ce que** ledit moteur électrique (40) est coaxialement disposé par rapport audit ressort accumulateur (10).

5. Module de serrage de frein selon une quelconque des revendications précédentes, **caractérisé en ce qu'**un écrou (48) dudit module de propulsion à écrou et broche (44) est retenu à l'intérieur de ladite tige de piston du frein creux et cylindrique, qui est sollicitée par ressort. (18), d'une façon à empêcher une rotation, mais permettre un mouvement linéaire, et **en ce que** ladite broche (46) est coaxialement entraînée par ledit moteur électrique.

6. Module de serrage de frein selon la revendication 5, **caractérisé en ce que** ladite broche (46) dudit module de propulsion à écrou et broche (44) fait saillie à partir de ladite chambre de ressort (14) dans l'intérieur de ladite tige de piston du frein creux et cylindrique, qui est sollicitée par ressort. (18).

7. Module de serrage de frein selon une quelconque des revendications précédentes, **caractérisé en ce que** ledit module de propulsion à écrou et broche (44) a une conception à inhibition.

8. Module de serrage de frein selon une quelconque des revendications précédentes, **caractérisé en ce que** ledit moteur électrique (40) est disposé pour la tension et la détente dudit ressort accumulateur (10), audit moteur électrique (40) fonctionnant en opposition à l'action dudit ressort accumulateur (10) pour le desserrage du frein à accumulateur, en permettant, d'autre côté, le mouvement de serrage du frein dudit ressort accumulateur (10) de façon, que ce ressort peut appliquer l'effort de serrage.

9. Module de serrage de frein selon une quelconque des revendications précédentes, **caractérisé en ce que** ledit vérin de commande de frein à accumulateur (4) est combiné avec un vérin de frein de service (2) en formant un vérin combiné de frein de service et de frein à accumulateur, renfermant un piston de frein de service (26) disposé dans le carter dudit vérin de frein de service (2), dans lequel ladite tige de piston de commande de frein à accumulateur (18) fait saillie à travers un forage central (21) d'un cloison (6) entre ledit vérin de frein de service (2) et ledit vérin de commande de frein à accumulateur (4) d'une telle façon, qu'elle agisse sur le vérin de frein de service (26).

10. Système de freinage d'un véhicule, comprenant au moins un module de serrage de frein selon une quelconque des revendications précédentes.
